# EUROPÄISCHE PATENTSCHRIFT

(11) **EP 2 048 212 B1**
(45) Veröffentlichungstag und Bekanntmachung des Hinweises auf die Patenterteilung: **12.05.2010**
(21) Anmeldenummer: 08164482.5
(22) Anmeldetag: 17.09.2008
(51) Int. Cl.: C09J 7/02, B65H 19/10

(54) **Klebeband für den fliegenden Rollenwechsel**
Adhesive tape for an on the fly reel change
Bande adhésive pour le changement de rouleau mobile

(30) Priorität: 08.10.2007 DE 102007048280
(43) Veröffentlichungstag der Anmeldung: 15.04.2009
(73) Patentinhaber: TESA SE, 20253 Hamburg (DE)
(72) Erfinder: Schwertfeger, Michael, 22147, Hamburg (DE); Nagel, Christoph, 22417, Hamburg (DE); Bruns, Christian, 22085, Hamburg (DE)

(56) Entgegenhaltungen:
- EP-A- 1 342 684
- EP-A- 1 640 301
- WO-A-03/018451
- WO-A-03/018454
- US-A- 4 575 017

## Beschreibung

Die Erfindung betrifft ein Klebeband für den fliegenden Rollenwechsel von auf Rollen aufgewickeltem Flachbahnmaterial sowie die Verwendung eines derartigen Klebebands.

Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig Haftklebebänder zum Einsatz, um das Ende der alten Bahn mit dem Anfang der neuen Bahn zu verbinden.

Die Durchführung eines fliegenden Rollenwechsels (auch "dynamischer Rollenwechsel" genannt) erfolgt in der papier-, folien- und vliesverarbeitenden Industrie nach zwei unterschiedlichen Verfahren.

Bei dem ersten Verfahren werden doppelseitig klebende Selbstklebebänder in Handarbeit am Bahnanfang der Bahn der neuen Rolle in einer vorteilhaften Anordnung verklebt (üblicherweise W- oder V-förmig), und das an dem Klebeband überstehende Bahnmaterial wird abgetrennt. Zusätzlich wird der Anfang der Bahn der neuen Rolle mit sogenannten Festhalteetiketten an der darunter liegenden Wicklung der neuen Rolle fixiert, um zu verhindern, dass die Bahn abgewickelt wird, wenn die neue Rolle auf die Oberflächengeschwindigkeit der alten Rolle beschleunigt. Nachteilig an diesem Verfahren ist, dass die Vorbereitung der Rollen sehr zeitaufwändig ist und das Verkleben den Einsatz von Fachkräften erfordert. Zudem führt das Verfahren nicht immer zu den gewünschten Ergebnissen, da die so erzielten Verklebungen wegen der Schichtung von Bahnmaterial, Festhalteetiketten und Klebestreifen relativ dick sind. Ferner kann es gerade bei dünnen, flexiblen Bahnmaterialien dazu kommen, dass am Anfang einer neuen Bahn infolge des bei der Rotation auftretenden gegengerichteten Luftstroms Ausstülpungen im Bahnmaterial auftreten, was im Allgemeinen zu einer schlechten Verklebung der Bahnen führen kann.

Bei dem zweiten bekannten Verfahren wird ein zweiseitig klebendes Selbstklebeband in gerader Linie unter oder über die oberste Lage des rollenförmigen Materials geklebt.

Die US 5,323,981 offenbart ein zweiseitiges Klebeband, das auf der Vorderseite eine hochtackige Klebemasse für den fliegenden Rollenwechsel aufweist. Auf der Rückseite sind zwei Klebemassenabschnitte positioniert, die vorteilhafterweise eine klebemassenfreie Zone zwischen den Abschnitten aufweisen. Dabei wird der hintere Klebemassenabschnitt, der permanent klebend ist, auf die oberste Lage der neuen Rolle geklebt und der vordere Klebemassenabschnitt, der repositionierbar ist, über die oberste Lage hinausreichend auf die zweite Lage geklebt. Der repositionierbare Klebemassenabschnitt erfüllt bei dieser Variante die Aufgabe eines Rollenverschlusses. Im Falle des fliegenden Rollenwechsels kommt es auf der Vorderseite des Klebebandes zum Kontakt der ablaufenden Bahn mit der neuen Rolle. Der repositionierbare Klebemassenabschnitt löst sich vom Material der zweiten Lage, und die neue Rolle wird in die Maschine eingezogen, gehalten durch die permanent klebende Klebemasse am Ende des Klebebands.

Die WO 95/29115 A offenbart ein ähnliches Klebeband. Dieses zweiseitige Klebeband weist auf der Oberseite (Vorderseite) zwei Klebemassen und auf der Unterseite (Rückseite) eine Klebemasse auf. Das Klebeband wird unter der obersten Lage der neuen Rolle fixiert. Dabei hält die eine Klebemasse der Oberseite die oberste Lage fest. Die zweite Klebemasse an der Oberseite ist für den Kontakt mit der ablaufenden Bahn zuständig. Auf der Unterseite ist eine repositionierbare Klebemasse, die im Falle des "Splices", also wenn die neue Rolle ihre Arbeit aufnimmt, deren oberste Lage freigibt.

Diese beide vorbekannten Klebebänder weisen einen gemeinsamen Nachteil auf. Bei beiden läuft nämlich die repositionierbare Klebemasse offen durch die Veredelungsmaschine, also die Maschine, in der das Flachbahnmaterial bearbeitet wird, so dass es zu Bahnverklebungen an Umlenkrollen oder Drucktüchern kommen kann, was wiederum Bahnabrisse zur Folge haben kann.

Eine Verbesserung dieses Problems lehrt die DE 196 28 317 A. Das darin offenbarte Klebeband ist ähnlich dem gemäß WO 95/29115 A aufgebaut, aber die repositionierbare Klebemasse der Rückseite ist durch ein zweiseitiges Klebeband mit einem spaltfähigen Träger (allgemein: "spaltbares System") ersetzt. Im Falle des Splices spaltet der Träger, so dass sich die oberste Lage der neuen Rolle von der zweiten Lage löst, und deckt mit den jeweiligen Spaltresten die Klebemassen so ab, dass diese nichtklebrig verbleiben. Damit werden störende Verklebungen beim Durchlauf durch die Veredelungsmaschinen verhindert.

Eine weitere Verbesserung lehrt die DE 199 02 179 A. Dabei ist der Spaltstreifen von der vorderen Kante der neuen Rolle eingerückt. Durch diese Einrückung lässt sich die Spliceeffizienz deutlich steigern.

Die DE 198 41 609 A beschreibt ein zweiseitig klebendes Haftelement. Dessen Träger besteht nicht aus einem einschichtigen Papier, sondern aus einem Papier/Papier-Verbund, der mit aushärtenden Klebepunkten verbunden ist. Dieses Haftelement wird auch unter die oberste Lage der neuen Rolle geklebt. Im Falle des Splices reißen die Klebepunkte Papierfasern aus einem der Verbundpapiere, und so wird die oberste Lage freigegeben.

Bei papierveredelnden Maschinen, besonders Druckmaschinen, muss zum einen bei der Vorbereitung des Rollenwechsels die Verbindungsstelle detektiert werden, zum anderen müssen die Reste des Klebebandes (ebenfalls als "Splice" bezeichnet, im folgenden zur Vermeidung von Missverständnissen als "Splicereste") später in dem fertigen Druckerzeugnis zum Aussortieren detektiert werden. Hierfür gibt es unterschiedliche Methoden und damit auch unterschiedliche Anforderungen an das Klebeband.

Die Detektierung der Position des Klebebandes für den Splice im Rollenwechsler kann optisch oder induktiv erfolgen.

Die WO 03/018451 A beschreibt ein Klebeband, das auf der Kontaktseite zur ablaufenden Bahn so eingefärbt ist, vorzugsweise schwarz, dass eine optische Detektierung und damit eine zeitgerechte Auslösung des Splices gewährleistet wird. Die zur Detektierung eingefärbte Seite zeigt bei dem Klebeband (bezogen auf die neue Rolle) radial nach außen, so dass Sensoren am Rollenwechsler das Klebeband detektieren können. Die Einfärbung kann erfolgen durch eine Bedruckung des Trägermaterials auf der Seite, auf die später die Klebemasse für den Kontakt zur ablaufenden Bahn geschichtet wird.

Die EP 1 041 025 A beschreibt ein Klebeband, das einen Träger mit Aluminiumfolie aufweist. Über diese wird eine induktive Detektierung ausgelöst.

Die Detektierung der Splicereste im fertigen Druckerzeugnis kann durch den Einsatz von Etiketten, die über den Rollenrand hinausragen, erfolgen. Dieses Verfahren birgt aber die Fehlermöglichkeit, dass die Etiketten im Druckprozess verlorengehen, so dass die Splicereste nicht sicher aussortiert werden können. Des Weiteren müssen immer einige zusätzliche Kopien aussortiert werden, um sicherzugehen, dass auch alle Kopien mit einem Splicerest aussortiert sind.

Eine induktive Detektierung bietet den Vorteil, dass die Splicereste sicher aussortiert werden können, und es kann auch jede einzelne Kopie aussortiert werden, die einen Splicerest enthält. Es müssen also deutlich weniger Kopien aussortiert werden, was sich in einer Kostenreduktion bemerkbar macht.

Weitere Klebebänder für den fliegenden Rollenwechsel, die Detektierungsmöglichkeiten bieten, sind aus der WO 03/018452 A, der WO 03/018453 A und der WO 03/018454 A bekannt.

Problematisch sind Druckmaschinen, die optisch die Position des Splices im Rollenwechsler bestimmen, aber induktiv die Splicereste aus dem Druckerzeugnis ausschleusen. Hierbei muss heute auf jeden Fall mindestens ein Etikett zusätzlich zum Klebeband geklebt werden.

Neueste Druckmaschinen stellen nun eine ganz besondere Anforderung an das Klebeband. Zum einen muss das Klebeband am Anfang des Rollenwechselprozesses genau detektiert werden, damit die Position des Klebebandes sicher bestimmt und so der Splice auch sicher ausgeführt werden kann. Zum anderen müssen die Splicereste im fertigen Druckerzeugnis sicher detektiert werden, damit die Ausschleusung der Druckerzeugnisse sichergestellt ist, die einen Splicerest enthalten. Zusätzlich kommt nun hinzu, dass keiner der detektierbaren Zusätze nach dem Splicevorgang beim Durchlauf durch die Druckmaschine sichtbar sein darf. Moderne Druckmaschinen haben nämlich einen Sensor, um Reißer schnell erkennen zu können und den Druckprozess schnell anhalten zu können, um die Verluste gering zu halten. Ist nun einer der detektierbaren Zusätze offensichtlich erkennbar, erkennt der Sensor nicht mehr das normale Papier, sondern z.B. die Aluminiumfolie oder die schwarze Einfärbung, und kann das als Papierreißer detektieren, was dann zu Fehlfunktionen im laufenden Prozess führt.

Es ist daher Aufgabe der Erfindung, ein Klebeband für den fliegenden Rollenwechsel von auf Rollen aufgewickeltem Flachbahnmaterial zu schaffen, das in der Anwendung zuverlässig und sicher ist und nicht zu Fehlfunktionen bei den erläuterten neuesten Druckmaschinen führt.

Diese Aufgabe wird gelöst durch ein Klebeband für den fliegenden Rollenwechsel von auf Rollen aufgewickeltem Flachbahnmaterial mit den Merkmalen des Anspruchs 1. Vorteilhafte Ausführungsformen der Erfindung ergeben sich aus den Unteransprüchen. Der Anspruch 18 betrifft die Verwendung eines derartigen Klebebandes.

Das erfindungsgemäße Klebeband ist an seiner Vorderseite optisch detektierbar, wie es für die Vorbereitung und den Ablauf des fliegenden Rollenwechsels, d.h. für den Splice, erforderlich ist. Beim nachfolgenden Durchlauf durch eine Veredelungsmaschine, z.B. eine Druckmaschine für Papier, können die Splicereste induktiv erfasst werden. Da die induktiv detektierbare Einrichtung (vorzugsweise eine Aluminiumfolie) optisch unauffällig angeordnet ist, arbeiten auch die oben erläuterten neuesten Druckmaschinen ohne Betriebsstörungen. Optisch unauffällig (optisch neutral) heißt insbesondere, dass die induktiv detektierbare Einrichtung von einem Sensor, der Papierreißer detektieren soll, nicht erkannt wird oder nicht von einer normalen Papieroberfläche unterschieden wird, wozu in den Unteransprüchen und den nachfolgend beschriebenen Ausführungsbeispielen einige Ausführungsformen angegeben sind.

Im folgenden wird die Erfindung anhand von Ausführungsbeispielen näher beschrieben. Die Zeichnungen zeigen in
- Figur 1: einen schematischen Querschnitt durch eine erste Ausführungsform des erfindungsgemäßen Klebebandes,
- Figur 2: einen schematischen Querschnitt durch eine zweite Ausführungsform des erfindungsgemäßen Klebebandes,
- Figur 3: einen schematischen Querschnitt durch eine dritte Ausführungsform des erfindungsgemäßen Klebebandes und
- Figur 4: einen schematischen Querschnitt durch eine vierte Ausführungsform des erfindungsgemäßen Klebebandes.

Zunächst wird eine erste Ausführungsform des Klebebandes beschrieben, wobei auch allgemeinere Aspekte erläutert werden.

Bei der ersten Ausführungsform ist als Träger ein beidseitig glattes Kraftpapier von z.B. 55 µm Dicke und einem Flächengewicht von 65 g/m² vorgesehen, das an einer Seite (im folgenden als Vorderseite bezeichnet) mit einer schwarzen Druckfarbe bedruckt wird. Vorteilhafterweise kann das Kraftpapier gestrichen sein, was zu einer besseren Verankerung der Druckfarbe führt. Wichtig an dem Papier sind die physikalischen Eigenschaften, vornehmlich die Reißkraft. Diese muss höher als die Bahnspannungen in der zum Einsatz kommenden Druckmaschine oder andern Bearbeitungsmaschinen liegen. Bei Maschinen mit geringeren Bahnspannungen kann das Papier auch dünner gewählt werden. Dies hätte Vorteile für den Verarbeitungsprozess, da dünnere Materialien den Maschinendurchlauf weniger stören.

Auf der der Bedruckung gegenüberliegenden Seite (im folgenden als Rückseite bezeichnet) des Trägers wird in einem weiteren Prozess als induktiv detektierbare Einrichtung eine Aluminiumfolie zukaschiert. Die Aluminiumfolie liegt in der Regel in einer Dicke von 6 µm bis 12 µm vor. Je nach Sensortyp kann sie aber auch dünner oder dicker ausfallen. Auch hier gilt, dass dünnere Verbünde den Maschinendurchlauf weniger stören als dicke Verbünde. Die Kaschierung kann z.B. über einen Zweikomponentenklebstoff oder mittels Polyethylen erfolgen. Verfahren, um einen solchen Verbund zu generieren, sind ausreichend bekannt. Die Folie kann die gleiche Breite haben wie das Trägerpapier, kann aber auch schmaler eingesetzt werden. Diese Aluminiumfolie wird mit einer weißen Druckfarbe bedruckt. Damit ist sichergestellt, dass ein Sensor für Reißer in einer modernen Druckmaschine durch den Durchlauf der Aluminiumfolie nicht gestört wird und somit auch keinen Reißer detektiert oder meldet.

Dieser Mehrfachverbund wird auf der schwarz bedruckten Seite (also der Vorderseite) mit einer Klebemasse (Selbstklebemasse) beschichtet. Die Klebemasse muss hochtackig sein, das heißt hohe Anfassklebkräfte haben und hohe Klebkräfte aufweisen.

Im Ausführungsbeispiel wird die Klebemasse mit einem silikonisierten Material abgedeckt, vorzugsweise einem Silikonpapier. Wird das Klebeband manuell verarbeitet, kann diese ablösbare Abdeckung eine Schlitzung aufweisen, also segmentiert sein, so dass die entstehenden Teilstücke unabhängig voneinander abgezogen werden können. Soll das Klebeband dagegen in einem automatischen Prozess verwendet werden, kann ein ungeschlitzt vorliegendes Abdeckmaterial vorteilhafter sein. Für die manuelle Verklebung ist das Abdeckmaterial vorzugsweise Papier, da es dann handeinreißbar ist. Bei einer automatischen Applikation kann das Abdeckmaterial auch aus einer Folie bestehen, da in diesem Fall das Klebeband mit Abdeckung maschinell geschnitten wird.

Wie die Anfassklebkraft der Klebemasse gemessen werden kann, wird durch das folgende Beispiel verdeutlicht:

Die Bestimmung der Anfassklebrigkeit wurde wie folgt durchgeführt: Als Maß für die Anfassklebrigkeit bei sehr kurzer Kontaktzeit wurde der sogenannte Rolling-Ball-Tack gemessen. Als zu untersuchende Probe wurde ein Standardpolyesterträger mit einer Stärke von 23 µm der jeweiligen Selbstklebemasse einseitig beschichtet (Selbstklebemassenauftrag nach Abdampfen des Lösungsmittels: 50 g/m²). Ein etwa 10 cm langer Streifen des Klebebandes wurde mit der klebenden Seite nach oben horizontal auf der Prüfebene befestigt. Eine Probenkugel aus Stahl (Durchmesser: 11 mm; Masse: 5,6 g) wurde mit Aceton gereinigt und für 2 h im Raumklima (Temperatur: 23°C +/- 1°C; relative Luftfeuchtigkeit: 50% +/-1%) konditioniert. Zur Messung wurde die Stahlkugel durch Herabrollen von einer 65 mm hohen Rampe (Neigungswinkel: 21°) im Schwerefeld der Erde beschleunigt. Von der Rampe wurde die Stahlkugel unmittelbar auf die klebende Oberfläche der Probe gelenkt. Der auf der Klebemasse bis zum Stillstand der Kugel zurückgelegte Weg wurde gemessen. Die so ermittelte Rollweglänge dient hierbei als inverses Maß für die Anfassklebrigkeit der Selbstklebemasse (d.h je kürzer der Rollweg ist, desto höher ist die Anfassklebrigkeit, und umgekehrt). Der jeweilige Messwert ergab sich (als Längenangabe in mm) aus dem Mittelwert von fünf Einzelmessungen.

Die Messung der Klebkraft wird in folgendem Beispiel erläutert:

Die Bestimmung der Klebkraft wurde hierbei wie folgt durchgeführt: Als definierter Haft- oder Prüfuntergrund (Klebkraftplatte) wurde die Papierseite eines auf eine Unterlage geklebten, einseitig klebenden SC-Papiers (SC: "super calendered") eingesetzt. Als zu untersuchende Probe wurde ein Standardpolyesterträger mit einer Stärke von 23 µm mit der jeweiligen Selbstklebemasse einseitig beschichtet (Selbstklebemassenauftrag nach Trocknung des Lösungsmittels: 50 g/m²). Ein 20 mm breiter Streifen des beschichteten Standardpolyesterträgers wurde unter Belastung (2 kg) auf das SC-Papier aufgedrückt. Unmittelbar im Anschluss daran wurde das Klebeband in einem Winkel von 180° vom Substrat mit einer Geschwindigkeit von 300 mm/min abgezogen und die hierfür bei Raumtemperatur benötigte Kraft gemessen. Der Messwert (in N/cm) ergab sich als Mittelwert aus drei Einzelmessungen.

Bei besonderen Ausführungen kann die Klebemasse der Kontaktseite (Vorderseite), also der nach Aufkleben auf eine neue Rolle radial nach außen zeigenden Seite, erhöhte Scherwerte aufweisen. Die Messung der Scherfestigkeit erfolgt dabei wie folgt:

Zur Messung der Scherfestigkeit von Klebemassen werden diese auf einen Standardträger (Polyesterfolie; Dicke: 25 µm) geschichtet. Vorteilhafterweise wird ein immer gleicher Masseauftrag von 25 g/m² gewählt. Nach dem Trocknen und einer eventuellen Vernetzung der Klebemasse wird ein Streifen von 13 mm Breite und mindestens 20 mm Länge herausgeschnitten und auf ein definiertes Papier (z.B. Tiefdruckpapier, z.B. Neopress T 54, 54 g/m², oder Streichrohpapier, z. B. Mediaprint, 135 g/m²) geklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt. Für eine bessere Differenzierung der einzelnen Klebemassen wird der Test entsprechend bei weiteren Prüftemperaturen (z.B. 40°C und 70°C) durchgeführt.

Solch ein Produkt mit erhöhten Scherwerten kommt besonders bei Druckmaschinen zum Einsatz, bei denen neben einer "Cold-Set"-Druckeinheit auch eine "Heat-Set"-Druckeinheit vorhanden ist. Dies ist in der Zukunft immer häufiger der Fall, da damit die Effektivitäten der Druckmaschinen erhöht werden können.

Auf der der Abdeckung gegenüberliegenden Seite (Rückseite) wird ein spaltbares System appliziert, womit sich die oberste Lage einer neuen Rolle mit Flachbahnmaterial auf der darunter befindlichen Lage fixieren lässt, wie eingangs erläutert. Dieses spaltbare System kann unterschiedlichste Ausführungsformen haben.

Wie in der DE 199 02 179 A beschrieben, kann es sich dabei um ein beidseitig mit Klebemasse beschichtetes Papier handeln, welches bei Belastungen in Z-Richtung in sich spaltet und somit die zur Verklebung notwendigen Klebemassen abdeckt. Belastungen in Z-Richtung sind Kraftkomponenten senkrecht zur Ebene des Trägers, wie sie auftreten, wenn das Flachbahnmaterial von der neuen Rolle abgerollt wird und sich die oberste Lage von der darunter befindlichen Lage löst. Sowohl die zur Rückseite des Trägers weisende Klebemasse als auch die Klebemasse auf der anderen Seite des Papiers können Selbstklebemassen sein. Es lassen sich aber auch aushärtende Klebemassen anwenden.

Aushärtende Klebemassen zum Träger haben den Vorteil, dass sie in geringeren Schichtdicken aufgebracht werden können und somit die Dicke des Gesamtsystems reduzieren. Aushärtende Klebemassen auf der anderen Seite, also der mit dem Bahnmaterial zu verklebenden Seite, bieten den Vorteil, dass besonders schwierige Verklebungsuntergründe sicher verklebt werden. Derartige Klebemassen werden z.B. durch Wasser oder andere Lösungsmittel oder Wärme aktiviert. Zwar wird beim Einsatz solcher Klebemassen mehr Zeit benötigt, denn die Klebemasse muß aktiviert und das Klebeband appliziert werden und danach die Klebemasse aushärten. Aber dies lässt sich in den heutigen Produktionszyklen realisieren, da häufig mit zentraler Splicevorbereitung gearbeitet wird. Dabei werden die Rollen in der Regel 6 Stunden bis 8 Stunden im Voraus vorbereitet.

Statt eines einlagigen Papiers kann auch ein Papier/Papier-Verbund, wie in EP 1 076 026 A beschrieben, ein Papier/FolienVerbund oder ein Folien/Folien-Verbund zum Einsatz kommen.

Die Spaltkraft aller beschrieben Systeme sollte zwischen 15 cN/cm und 70 cN/cm liegen.

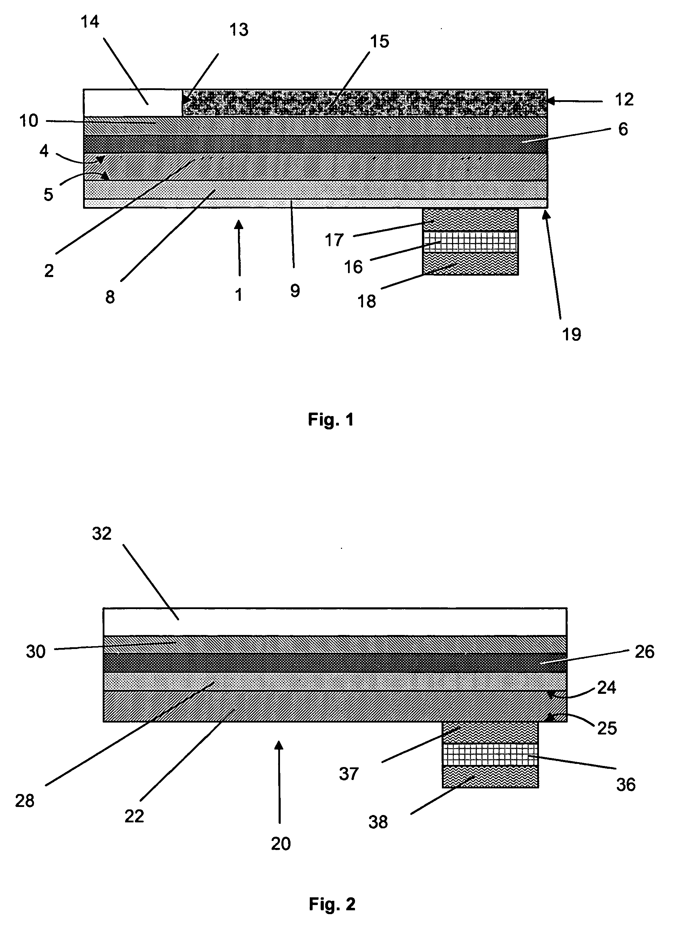

Anhand von Figur 1 wird nun ein konkretes Beispiel für die erste Ausführungsform des Klebebandes erläutert. Die Figur 1 zeigt einen schematischen Querschnitt durch das mit 1 bezeichnete Klebeband, der nicht maßstäblich und insbesondere stark überhöht dargestellt ist. Die Breitenrichtung des Klebebandes 1 erstreckt sich von links nach rechts und somit bei der Anwendung in Längsrichtung des mit dem Klebeband 1 zu verbindenden Flachbahnmaterials.

Ein beidseitig glattes Kraftpapier 2 als Träger von z.B. 55 µm Dicke und einem Flächengewicht von 65 g/m² mit einer Vorderseite 4 und einer Rückseite 5 ist mit einer Schicht 6 mit schwarzer Druckfarbe als optisch detektierbare Einrichtung bedruckt. Wie im Vorhergehenden beschrieben, kann es sich um ein einseitig bzw. doppelseitig gestrichenes Papier handeln. Die Bedruckung erfolgt auf der Vorderseite 4, also auf der Seite, die radial nach außen zeigt, wenn das Klebeband 1 auf eine neue Rolle mit Flachbahnmaterial aufgeklebt ist.

Auf der der Schicht 6 gegenüberliegenden Seite, also der Rückseite 5, ist eine Aluminiumfolie 8 als induktiv detektierbare Einrichtung aufkaschiert. Diese ist auf der radial nach innen zeigenden Seite mit Farbe bedruckt, wodurch eine Decklage 9 ausgebildet ist, so dass das Aluminium der Aluminiumfolie 8 nicht sichtbar ist. Diese Farbe ist vorzugsweise weiß, d.h. papierähnlich.

Über der Schicht 6 ist eine hochtackige Selbstklebemasse 10 ("Pressure sensitive adhesive", Kontaktklebemasse) aufgebracht. Diese kann transparent sein, so dass die schwarze Bedruckung der Schicht 6 durchscheint, oder kann selbst dunkel eingefärbt sein, um die Detektierbarkeit zu verbessern. Abgedeckt wird die Selbstklebemasse 10 mit einer ablösbaren Abdeckung 12, die durch einen Schlitz 13 in zwei Segmente 14, 15 unterteilt ist.

An der Decklage 9 ist ein spaltbares System positioniert, das im Ausführungsbeispiel gemäß Figur 1 aus einem spaltfähigen Papier 16 und zwei als Selbstklebemassen ausgestalteten Klebemassen 17 und 18 besteht. Die Positionierung davon erfolgt vorteilhafterweise um 1 mm bis 15 mm versetzt von der Kante 19 des Klebebandes 1, siehe Figur 1.

Die Figur 2 zeigt eine zweite Ausführungsform des hier mit 20 bezeichneten Klebebandes, bei der die Schichtenfolge anders ist als bei dem Klebeband 1.

Ein beidseitig glattes Kraftpapier 22 als Träger von z.B. 55 µm Dicke und einem Flächengewicht von 65 g/m² und mit einer Vorderseite 24 und einer Rückseite 25 ist an seiner Vorderseite 24 mit einer Aluminiumfolie 28 kaschiert. Die Dicke der Aluminiumfolie 28 liegt wieder zwischen 6 µm und 12 µm. Die induktiv detektierbare Einrichtung in Form der Aluminiumfolie 28 ist also hier im Gegensatz zu der ersten Ausführungsform an der Vorderseite 24 angeordnet. Dieser Verbund ist auf der Aluminiumfolie 28 zum Erzeugen einer optisch detektierbaren Schicht 26 schwarz bedruckt. Darüber ist wiederum eine hochtackige Selbstklebemasse 30 (Kontaktklebemasse) aufgebracht und mit einer ablösbaren Abdeckung 32 abgedeckt. Die Abdeckung 32 ist nicht segmentiert, weist also keinen Schlitz auf, was bei einer automatischen Applizierung des Klebebands 20 vorteilhafter ist.

Auf der Rückseite ist wiederum ein spaltbares System vorgesehen, das wie bei der Ausführungsform gemäß Figur 1 ein spaltbares Papier 36 und zwei Selbstklebemassen 37, 38 aufweist.

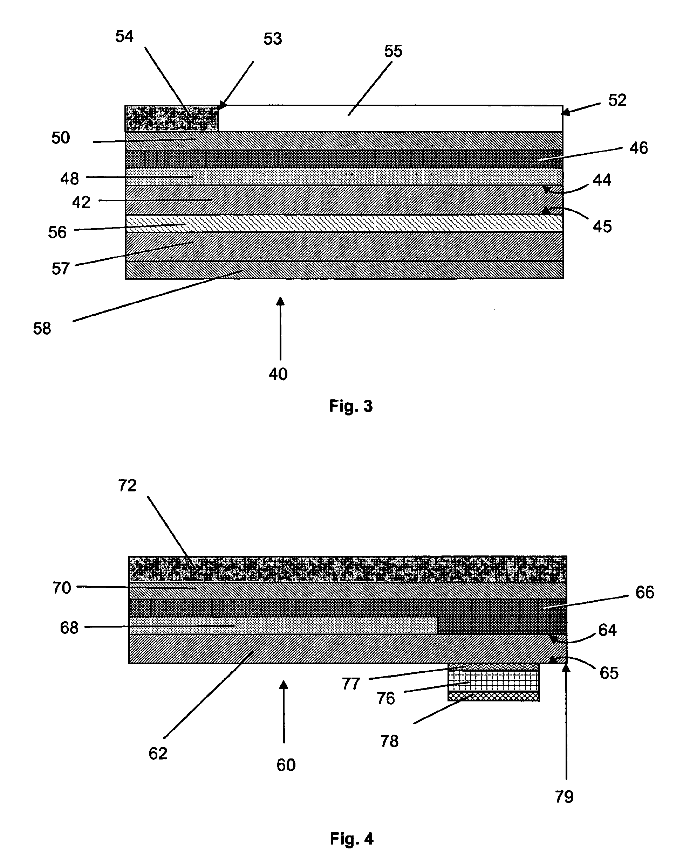

In Figur 3 ist eine dritte Ausführungsform des Klebebandes dargestellt, das hier mit 40 bezeichnet ist.

Ein beidseitig glattes Kraftpapier 42 als Träger von z.B. 55 µm Dicke und einem Flächengewicht von 65 g/m² und mit einer Vorderseite 44 und einer Rückseite 45 wird mit einer Aluminiumfolie 48 kaschiert. Auf die kaschierte Aluminiumfolie 48 erfolgt eine Bedruckung 46 mit Farbe und die Kaschierung einer Kontaktklebemasse 50. Abgedeckt wird die Kontaktklebemasse 50 mit einer ablösbaren Abdeckung 52, die durch einen Schlitz 53 in zwei Abschnitte 54 und 55 segmentiert ist, aber auch in einem Stück vorliegen kann.

Auf die Rückseite 45 des Trägers 42 wird, wie in EP 1 076 026 A beschrieben, mittels eines Kaschierlackes 56 eine Papierlage 57 kaschiert. Hierbei kann es sich um das gleiche Papier wie für den Träger 42 handeln. Um die Gesamtdicke des Systems zu reduzieren und da die Papierlage 57 keine Bahnspannung aufnehmen muss, wird vorzugsweise ein dünneres Papier eingesetzt.

Diese Papierlage 57 wird dann wieder mit einer Klebemasse 58 versehen, die analog zu der Kontaktklebemasse 50 sein kann. Aber auch hier gilt, dass geringere Masseaufträge positiv für die Gesamtdicke sind. Zum anderen wird diese Seite des Klebebandes 40 manuell verklebt, d.h. die technischen Anforderungen an die Klebemasse 58 sind nicht so hoch wie an die Klebemasse 50. Beim Splice löst sich die Papierlage 57 an dem Kaschierlack 56 von dem Träger 42, so dass keine klebrigen Splicereste entstehen.

Die Figur 4 zeigt eine vierte Ausführungsform des Klebebandes, das hier mit 60 bezeichnet ist.

Ein beidseitig glattes Kraftpapier 62 als Träger von z.B. 55 µm Dicke und einem Flächengewicht von 65 g/m² wird an seiner Vorderseite 64 mit einer Aluminiumfolie 68 kaschiert. Die Aluminiumfolie 68 hat in diesem Fall eine geringere Breite als das Gesamtprodukt. Die Breite der Aluminiumfolie 68 ist um die Breite des spaltbaren Systems 76, 77, 78 plus einen vorgegebenen Abstand von der Kante 79 reduziert. So kommt es nicht zu einer Überlappung des spaltbaren Systems 76, 77, 78 und der Aluminiumfolie 68. Dies wirkt sich positiv auf die Flexibilität insbesondere des vorderen Bereiches aus. Somit wird die Maschinengängigkeit verbessert. Dieser Verbund wird in ganzer Breite auf der Aluminiumseite bedruckt (Schicht 66) und mit einer Kontaktklebemasse 70 kaschiert und einer ablösbaren Abdeckung 72 abgedeckt.

Das spaltbare System besteht in diesem Fall aus einem einlagigen Papier 76, das unter Belastung in Z-Richtung spaltet. Die Klebemassen 77, 78 sind keine Selbstklebemassen, sondern Klebemassen, die nach einer Aktivierung, z.B. durch Lösungsmittel (organische oder Wasser) oder Wärme, aktiviert (klebrig) werden und dann durch Abdunsten bzw. Erkalten erstarren. Diese Klebemassen können bei besonders kritisch zu verklebenden Untergründen Vorteile bieten.

Die Anwendung der erläuterten Ausführungsformen des Klebebandes ergibt sich aus dem Bisherigen.

## Patentansprüche

1. Klebeband für den fliegenden Rollenwechsel von auf Rollen aufgewickeltem Flachbahnmaterial, mit einem Träger (2; 22; 42; 62), der eine Vorderseite (4; 24; 44; 64) und eine Rückseite (5; 25; 45; 65) aufweist, wobei an der Vorderseite eine optisch detektierbare Einrichtung (6; 26; 46; 66) und eine exponierbare Selbstklebemasse (10; 30; 50; 70) angeordnet sind und wobei an der Rückseite ein klebendes spaltbares System (16, 17, 18; 36, 37, 38; 56, 57, 58; 76, 77, 78) angeordnet ist, **gekennzeichnet durch** eine induktiv detektierbare Einrichtung (8; 28; 48; 68), die optisch unauffällig angeordnet ist.

2. Klebeband nach Anspruch 1, **dadurch gekennzeichnet, dass** die induktiv detektierbare Einrichtung eine Metallfolie (8; 28; 48; 68) aufweist, vorzugsweise eine Aluminiumfolie mit einer Dicke im Bereich von 2 µm bis 20 µm.

3. Klebeband nach Anspruch 1 oder 2, **dadurch gekennzeichnet, dass** die induktiv detektierbare Einrichtung (8) an der Rückseite (5) des Trägers (2) angeordnet ist und mit einer optisch unauffälligen Decklage (9) versehen ist.

4. Klebeband nach Anspruch 3, **dadurch gekennzeichnet, dass** die optisch unauffällige Decklage (9) Druckfarbe aufweist, vorzugsweise einen papierfarbenen Aufdruck.

5. Klebeband nach Anspruch 1 oder 2, **dadurch gekennzeichnet, dass** die induktiv detektierbare Einrichtung (28; 48; 68) an der Vorderseite (24; 44; 64) des Trägers (22; 42; 62) angeordnet und von der optisch detektierbaren Einrichtung (26; 46; 66) verdeckt ist.

6. Klebeband nach einem der Ansprüche 1 bis 5, **dadurch gekennzeichnet, dass** die optisch detektierbare Einrichtung eine optisch detektierbare Schicht (6; 26; 46; 66) aufweist, vorzugsweise einen Aufdruck mit eingefärbter Druckfarbe.

7. Klebeband nach einem der Ansprüche 1 bis 6, **dadurch gekennzeichnet, dass** die optisch detektierbare Einrichtung einen farbigen Zusatz zu der Selbstklebemasse aufweist.

8. Klebeband nach einem der Ansprüche 1 bis 7, **dadurch gekennzeichnet, dass** die Selbstklebemasse (10; 30; 50; 70) von einer ablösbaren Abdeckung (12; 32; 52; 72) abgedeckt ist, die vorzugsweise ein Silikonpapier aufweist.

9. Klebeband nach Anspruch 8, **dadurch gekennzeichnet, dass** die ablösbare Abdeckung (12; 52) segmentiert ist.

10. Klebeband nach einem der Ansprüche 1 bis 9, **dadurch gekennzeichnet, dass** das spaltbare System (16, 17, 18; 36, 37, 38; 76, 77, 78) ein einlagiges Papier (16; 36; 76) aufweist, das an seiner einen Seite über eine erste Klebemasse (17; 37; 77) mit der Rückseite (25; 65) des Trägers (22; 62) bzw. einer zwischen der Rückseite (5) des Trägers (2) und der ersten Klebemasse (17) angeordneten Schicht (9) verbunden ist und das an seiner gegenüberliegenden zweiten Seite eine zweite Klebemasse (18; 38; 78) aufweist, die optional abdeckbar ist, wobei das Papier (16; 36; 76) spaltfähig ist und nach Spaltung in zwei Reste mit dem einen Rest die erste Klebemasse (17; 37; 77) und mit dem anderen Rest die zweite Klebemasse (18; 38; 78) bedeckt.

11. Klebeband nach Anspruch 10, **dadurch gekennzeichnet, dass** die erste Klebemasse (17; 37; 77) und/oder die zweite Klebemasse (18; 38; 78) eine aktivierbare Klebemasse, eine aushärtende Klebemasse und/oder eine Selbstklebemasse aufweist.

12. Klebeband nach einem der Ansprüche 1 bis 9, **dadurch gekennzeichnet, dass** das spaltbare System (56; 57; 58) einen zweiten Träger (57) aufweist, vorzugsweise aus Papier, der mittels eines Lackes (56) mit der Rückseite (45) des Trägers (42) bzw. einer zwischen der Rückseite des Trägers und dem Lack angeordneten Schicht verbunden ist, wobei die dem Lack (56) gegenüberliegende Seite des zweiten Trägers (57) mit einer Klebemasse (58) versehen ist und wobei der Lack (56) dazu eingerichtet ist, dass im Spaltprozess die Trennung an einer Grenzschicht des Lackes oder innerhalb des Lackes erfolgt.

13. Klebeband nach einem der Ansprüche 1 bis 9, **dadurch gekennzeichnet, dass** das spaltbare System einen Verbund mit Papier/Papier, Papier/Folienmaterial oder Folienmaterial/Folienmaterial aufweist.

14. Klebeband nach einem der Ansprüche 1 bis 13, **dadurch gekennzeichnet, dass** die Selbstklebemasse (10; 30; 50; 70) an der Vorderseite mindestens eine der folgenden Substanzen aufweist: Acrylat, Naturkautschuk, Synthesekautschuk.

15. Klebeband nach einem der Ansprüche 1 bis 14, **dadurch gekennzeichnet, dass** die Selbstklebemasse (10; 30; 50; 70) an der Vorderseite eine Rollweglänge von weniger als 40 mm hat.

16. Klebeband nach einem der Ansprüche 1 bis 14, **dadurch gekennzeichnet, dass** die Selbstklebemasse (10; 30; 50; 70) an der Vorderseite eine Rollweglänge im Bereich von 40 mm bis 100 mm hat.

17. Klebeband nach einem der Ansprüche 1 bis 16, **dadurch gekennzeichnet, dass** der Träger (2; 22; 42; 62) ein Kraftpapier aufweist.

18. Verwendung eines Klebebandes nach einem der Ansprüche 1 bis 17 bei einem fliegenden Rollenwechsel von auf Rollen aufgewickeltem Flachbahnmaterial.

## Claims

1. Adhesive tape for the flying roll change of flat web material wound on rolls, with a carrier (2; 22; 42; 62) having a leading side (4; 24; 44; 64) and a trailing side (5; 25; 45; 65), an optically detectable means (6; 26; 46; 66) and an exposable self-adhesive compound (10; 30; 50; 70) being arranged on the leading side and a cleavable adhesive system (16, 17, 18; 36, 37, 38; 56, 57, 58; 76, 77, 78) being arranged on the trailing side, **characterized by** an inductively detectable means (8; 28; 48; 68) which is arranged in a visually inconspicuous manner.

2. Adhesive tape according to Claim 1, **characterized in that** the inductively detectable means has a metal foil (8; 28; 48; 68), preferably an aluminium foil having a thickness in the range of from 2 µm to 20 µm.

3. Adhesive tape according to Claim 1 or 2, **characterized in that** the inductively detectable means (8) is arranged on the trailing side (5) of the carrier (2) and is provided with a visually inconspicuous cover layer (9).

4. Adhesive tape according to Claim 3, **characterized in that** the visually inconspicuous cover layer (9) has printing ink, preferably a paper-coloured imprint.

5. Adhesive tape according to Claim 1 or 2, **characterized in that** the inductively detectable means (28; 48; 68) is arranged on the leading side (24; 44; 64) of the carrier (22; 42; 62) and concealed by the optically detectable means (26; 46; 66).

6. Adhesive tape according to one of Claims 1 to 5, **characterized in that** the optically detectable means has an optically detectable layer (6; 26; 46; 66), preferably an imprint with dyed printing ink.

7. Adhesive tape according to one of Claims 1 to 6, **characterized in that** the optically detectable means has a coloured addition to the self-adhesive compound.

8. Adhesive tape according to one of Claims 1 to 7, **characterized in that** the self-adhesive compound (10; 30; 50; 70) is covered by a detachable cover (12; 32; 52; 72) which preferably has a silicone paper.

9. Adhesive tape according to Claim 8, **characterized in that** the detachable cover (12; 52) is segmented.

10. Adhesive tape according to one of Claims 1 to 9, **characterized in that** the cleavable system (16, 17, 18; 36, 37, 38; 76, 77, 78) has a single-layer paper (16; 36; 76) which on its one side is connected via a first adhesive compound (17; 37; 77) to the trailing side (25; 65) of the carrier (22; 62) or a layer (9) arranged between the trailing side (5) of the carrier (2) and the first adhesive compound (17) and which has on its opposing second side a second adhesive compound (18; 38; 78) which can optionally be covered, wherein the paper (16; 36; 76) is cleavable and after cleavage into two remains covers the first adhesive compound (17; 37; 77) with one remain and the second adhesive compound (18; 38; 78) with the other remain.

11. Adhesive tape according to Claim 10, **characterized in that** the first adhesive compound (17; 37; 77) and/or the second adhesive compound (18; 38; 78) has an activatable adhesive compound, a curing adhesive compound and/or a self-adhesive compound.

12. Adhesive tape according to one of Claims 1 to 9, **characterized in that** the cleavable system (56; 57; 58) has a second carrier (57), preferably made of paper, which is connected by means of a coat (56) to the trailing side (45) of the carrier (42) or a layer arranged between the trailing side of the carrier and the coat, the side of the second carrier (57) opposing the coat (56) being provided with an adhesive compound (58) and the coat (56) being configured in such a way that in the cleaving process the separation takes place at a boundary layer of the coat or within the coat.

13. Adhesive tape according to one of Claims 1 to 9, **characterized in that** the cleavable system has a composite comprising paper/paper, paper/foil material or foil material/foil material.

14. Adhesive tape according to one of Claims 1 to 13, **characterized in that** the self-adhesive compound (10; 30; 50; 70) has on the leading side at least one of the following substances: acrylate, natural rubber, synthetic rubber.

15. Adhesive tape according to one of Claims 1 to 14, **characterized in that** the self-adhesive compound (10; 30; 50; 70) has on the leading side a length of the rolling distance of less than 40 mm.

16. Adhesive tape according to one of Claims 1 to 14, **characterized in that** the self-adhesive compound (10; 30; 50; 70) has on the leading side a length of the rolling distance in the range of from 40 mm to 100 mm.

17. Adhesive tape according to one of Claims 1 to 16, **characterized in that** the carrier (2; 22; 42; 62) has a kraft paper.

18. Use of an adhesive tape according to one of Claims 1 to 17 in a flying roll change of flat web material wound on rolls.

## Revendications

1. Bande adhésive pour le changement de rouleau mobile de matériau en bande plate enroulé sur des rouleaux, comprenant un support (2 ; 22 ; 42 ; 62), qui présente un côté avant (4 ; 24 ; 44 ; 64) et un côté arrière (5 ; 25 ; 45 ; 65), un dispositif détectable optiquement (6 ; 26 ; 46 ; 66) et une masse autoadhésive exposable (10 ; 30 ; 50 ; 70) étant disposés sur le côté avant et un système clivable adhésif (16, 17, 18 ; 36, 37, 38 ; 56, 56, 58 ; 76, 77, 78) étant disposé sur le côté arrière, **caractérisée par** un dispositif détectable par induction (8 ; 28 ; 48 ; 68), qui est disposé discrètement du point de vue optique.

2. Bande adhésive selon la revendication 1, **caractérisée en ce que** le dispositif détectable par induction présente une feuille métallique (8 ; 28 ; 48 ; 68), de préférence une feuille d'aluminium, ayant une épaisseur de l'ordre de 2 µm à 20 µm.

3. Bande adhésive selon la revendication 1 ou 2, **caractérisée en ce que** le dispositif détectable par induction (8) est disposé sur le côté arrière (5) du support (2) et est pourvu d'une couche de revêtement (9) discrète du point de vue optique.

4. Bande adhésive selon la revendication 3, **caractérisée en ce que** la couche de revêtement (9) discrète du point de vue optique présente des encres d'impression, de préférence une impression à la couleur du papier.

5. Bande adhésive selon la revendication 1 ou 2, **caractérisée en ce que** le dispositif détectable par induction (28 ; 48 ; 68) est disposé sur le côté avant (24 ; 44 ; 64) du support (22 ; 42 ; 62) et est recouvert par le dispositif détectable optiquement (26 ; 46 ; 66).

6. Bande adhésive selon l'une quelconque des revendications 1 à 5, **caractérisée en ce que** le dispositif détectable optiquement présente une couche détectable optiquement (6 ; 26 ; 46 ; 66), de préférence une impression avec une encre d'impression colorée.

7. Bande adhésive selon l'une quelconque des revendications 1 à 6, **caractérisée en ce que** le dispositif détectable optiquement présente un additif coloré à la masse autoadhésive.

8. Bande adhésive selon l'une quelconque des revendications 1 à 7, **caractérisée en ce que** la masse autoadhésive (10 ; 30 ; 50 ; 70) est recouverte par un revêtement détachable (12 ; 32 ; 52 ; 72), qui présente de préférence un papier siliconé.

9. Bande adhésive selon la revendication 8, **caractérisée en ce que** le revêtement détachable (12 ; 52) est segmenté.

10. Bande adhésive selon l'une quelconque des revendications 1 à 9, **caractérisée en ce que** le système clivable (16, 17, 18 ; 36, 37, 38 ; 76, 77, 78) présente un papier monocouche (16 ; 36 ; 76) qui est connecté au niveau de son premier côté par le biais d'une première masse adhésive (17 ; 37 ; 77) au côté arrière (25 ; 65) du support (22 ; 62) ou à une couche (9) disposée entre le côté arrière (5) du support (2) et la première masse adhésive (17), et présente sur son deuxième côté opposé une deuxième masse adhésive (18 ; 38 ; 78) qui peut être revêtue optionnellement, le papier (16 ; 36 ; 76) étant clivable et recouvrant, après clivage, en deux portions résiduelles, avec une portion résiduelle la première masse adhésive (17 ; 37 ; 77) et avec l'autre portion résiduelle la deuxième masse adhésive (18 ; 38 ; 78).

11. Bande adhésive selon la revendication 10, **caractérisée en ce que** la première masse adhésive (17 ; 37 ; 77) et/ou la deuxième masse adhésive (18 ; 38 ; 78) présentent une masse adhésive activable, une masse adhésive durcissable et/ou une masse autoadhésive.

12. Bande adhésive selon l'une quelconque des revendications 1 à 9, **caractérisée en ce que** le système clivable (56 ; 57 ; 58) présente un deuxième support (57), de préférence en papier, qui est connecté au moyen d'une laque (56) au côté arrière (45) du support (42) ou d'une couche disposée entre le côté arrière du support et la laque, le côté du deuxième support (57) opposé à la laque (56) étant pourvu d'une masse adhésive (58) et la laque (56) étant prévue de telle sorte qu'il se produise au cours du processus de clivage la séparation au niveau d'une couche limite de laque ou à l'intérieur de la laque.

13. Bande adhésive selon l'une quelconque des revendications 1 à 9, **caractérisée en ce que** le système clivable présente un assemblage composite papier/papier, papier/matériau en feuille ou matériau en feuille/matériau en feuille.

14. Bande adhésive selon l'une quelconque des revendications 1 à 13, **caractérisée en ce que** la masse autoadhésive (10 ; 30 ; 50 ; 70) présente sur le côté avant au moins l'une des substances suivantes : acrylate, caoutchouc naturel, caoutchouc synthétique.

15. Bande adhésive selon l'une quelconque des revendications 1 à 14, **caractérisée en ce que** la masse autoadhésive (10 ; 30 ; 50; 70) présente sur le côté avant une longueur de voie de roulement inférieure à 40 mm.

16. Bande adhésive selon l'une quelconque des revendications 1 à 14, **caractérisée en ce que** la masse autoadhésive (10 ; 30 ; 50 ; 70) présente sur le côté avant une longueur de voie de roulement de l'ordre de 40 mm à 100 mm.

17. Bande adhésive selon l'une quelconque des revendications 1 à 16, **caractérisée en ce que** le support (2 ; 22 ; 42 ; 62) présente un papier kraft.

18. Utilisation d'une bande adhésive selon l'une quelconque des revendications 1 à 17, dans le cas d'un changement de rouleau mobile de matériau en bande plate enroulé sur des rouleaux.
